# EUROPEAN PATENT APPLICATION

(11) **EP 4 349 535 A1**
(43) Date of publication of application: **10.04.2024**
(21) Application number: 22811512.7
(22) Date of filing: 04.05.2022
(51) Int. Cl.: B25J 9/00, B25J 11/00, B25J 19/00, A61H 3/00

(54) **ROBOTIC EXOSKELETON AND MANUAL MUSCLE STRENGTH SUPPORT DEVICE THEREFOR**

(30) Priority: 27.05.2021 KR 20210068148
(71) Applicant: Hexarhumancare Co., Ltd, Ansan-si, Gyeonggi-do 15588 (KR)
(72) Inventor: HAN, Chang Soo, Seoul 06764 (KR)
(74) Representative: V.O.
(86) International application number: PCT/KR2022/006394
(87) International publication number: WO 2022/250319

(57) **Abstract**

A passive muscular strength support apparatus for an exoskeleton robot according to the present invention includes a body including first and second driving bodies coupled to each other to have a driving space therein; a first connection configured to connect a hip joint area of a user and the first driving body; a second connection configured to connect a thigh area of the user and the first driving body; a third connection configured to connect a chest or back area of the user and the second driving body; an elastic portion provided in the driving space between the first and second driving bodies, wherein elasticity of the elastic portion is deformed; and an inducer for inducing deformation of the elastic portion in conjunction with the movement of at least one of the first to third connections with respect to the body. According to the above configuration, usability may be improved by easily supporting the muscular strength of a user through simple operation.

## Description

### [Cross-Reference to Related Application]

This application is a National Stage Entry of PCT International Application No. PCT/KR2022/006394, which was filed on May 4, 2022, and claims priority to Korean Patent Application No. 10-2021-0068148, filed on May 27, 2021, in the Korean Intellectual Property Office, the disclosure of which is incorporated herein by reference.

### [Technical Field]

The present invention relates to an exoskeleton robot and a passive muscular strength support apparatus thereof, and more particularly, to a passive muscular strength support apparatus for an exoskeleton robot that is capable of easily changing the elasticity for supporting muscular strength with simple operation and improving convenience of use by simple installation and detachment.

### [Background Art]

In general, the support holder of a passive exoskeleton robot for supporting muscular strength supports muscular strength by pushing the chest area during the lifting operation of a certain load or by being located on the back and pulling the waist. Joint modules store elastic energy in springs such as gas springs and coil springs and use the elastic energy to support muscular strength. In particular, when lifting or moving a load by outputting elasticity stored in the ligaments and lumbar joints of the lumbar and sacral regions of the body, the modules play a role in supporting muscular strength by reducing the load when a user bends or twists forward.

In addition, depending on the purpose, support type, and position, the joint modules of a muscular strength support exoskeleton must be manufactured separately and connected to a holder for supporting the user's body. Accordingly, an exoskeleton robot is manufactured individually depending on the type of muscular strength support. In addition, it is not easy for users to attach or detach the exoskeleton robot, the method of use is complicated, and economic efficiency is low. Therefore, in recent years, various studies have been continuously required to improve the usability of exoskeleton robots.

### [Disclosure]

### [Technical Problem]

Therefore, the present invention has been made in view of the above problems, and it is one object of the present invention to provide an exoskeleton robot that is capable of easily supporting muscular strength through simple operation and has excellent usability due to improved wearability.

It is another object of the present invention to provide a passive muscular strength support apparatus for the exoskeleton robot satisfying the above objectives.

### [Technical Solution]

In accordance with one aspect of the present invention, provided is an exoskeleton robot including a body including first and second driving bodies coupled to each other to have a driving space therein; a first connection configured to connect a hip joint area of a user and the first driving body; a second connection configured to connect a thigh area of the user and the first driving body; a third connection configured to connect a chest or back area of the user and the second driving body; an elastic portion provided in the driving space between the first and second driving bodies, wherein elasticity of the elastic portion is deformed; and an inducer for inducing deformation of the elastic portion in conjunction with movement of at least one of the first to third connections with respect to the body.

In addition, the third connection may be inserted into a guide hole provided in the second driving body, and a position thereof may be adjusted along a guide rail provided in the guide hole.

In addition, the guide rail may have a stepped rail shape to adjust a position of the third connection in an adjustment angle range according to physical conditions of the user.

In addition, the adjustment angle range may include a range of 0 to 100°.

In addition, the inducer may include a first guiding member that is axially coupled to the first driving body so as to be connected to one end of the elastic portion and is capable of axial rotation in a direction in which the elastic portion is wound or unwound; and a second guiding member configured to move along a lead line formed in the first driving body so as to be connected to the other end of the elastic portion, wherein the first and second guiding members are linked to movement of at least one of the second or third connection.

In addition, the elastic portion may include a torsion spring, the first guiding member may include an adjustment hinge that rotates in conjunction with an inner end provided inside the elastic portion, and the second guiding member may include a guiding pin that is coupled to an outer end provided outside the elastic portion and is guided along the lead line.

In addition, the inducer may include one or more guiders coaxially connected to the first guiding member to transmit movement of the second or third connection to the first guiding member.

In accordance with another aspect of the present invention, provided is an exoskeleton robot including first holders mounted on a hip joint area of a user; a second holder mounted on a thigh area of the user; a third holder mounted on a chest or back area of the user; and the passive muscular strength support apparatus that provides driving force by storing elastic energy to support muscular strength and includes a body, first to third connections, an elastic portion, and an inducer, wherein the first to third connections are connected to the first to third holders, respectively.

In addition, the first holders may be connected to a plurality of linkers connecting an upper limb for supporting shoulders and elbows and a lower limb for supporting hips, knees, and ankles.

In addition, the first holders may include at least one pair of first holding bodies with a predetermined area to be in close contact with a hip joint area of the user, a mounting hole through which the first connection is connected may be formed through the first holding bodies, and a plurality of linker holes through which a plurality of linkers are respectively connected may be formed through the first holding bodies.

In addition, the second holder may include at least one pair of second holding bodies curved to fit tightly against a thigh area of the user, and the second holding bodies and the second connection may be linked by the first connection members.

In addition, the third holder may include a third holding body that is attached or detached to a chest or back area of the user, and the third holding body and the third connection may be linked by the second connection members.

### [Advantageous effects]

According to the present invention having the configuration described above, first, through simple manipulation by a user wearing an exoskeleton robot, a passive muscular strength support apparatus can transform and store elasticity. As a result, driving force required to support muscular strength can be simply stored and output without unnecessary joint driving motion.

Second, parts can be simplified through simple manual operation, which reduces size, improving wearability, and increasing economic efficiency.

Third, a support form can be easily changed to connect to the user's chest or back in response to the user's various usage conditions, thereby improving usability through ease of wearing and detaching.

### [Description of Drawings]

FIG. 1 is a perspective view schematically showing the front view of a user wearing an exoskeleton robot according to a preferred embodiment of the present invention.
FIG. 2 is a perspective view schematically showing the side view of a user wearing an exoskeleton robot according to a preferred embodiment of the present invention.
FIG. 3 is a perspective view schematically showing the rear view of a user wearing an exoskeleton robot according to a preferred embodiment of the present invention.
FIG. 4 is a perspective view schematically showing the exoskeleton robot shown in FIG. 1.
FIG. 5 is an exploded perspective view schematically showing the exoskeleton robot shown in FIG. 4.
FIG. 6 is an exploded perspective view schematically showing the passive muscular strength support apparatus shown in FIG. 5.
FIG. 7 is a schematic top view for explaining the position control of a third connection of the passive muscular strength support apparatus shown in FIG. 5.
FIG. 8 is a perspective view schematically showing a second holder of the exoskeleton robot mounted on the user' back, shown in FIG. 1.
FIG. 9 is a perspective view schematically showing the exoskeleton robot shown in FIG. 8.

### [Best Mode]

Hereinafter, preferred embodiments of the present invention will be described with reference to the accompanying drawings. However, the spirit of the present invention is not limited to the embodiments, and the spirit of the present invention may be proposed differently by adding, changing, and deleting the elements constituting the embodiments, which is also within the spirit of the present invention.

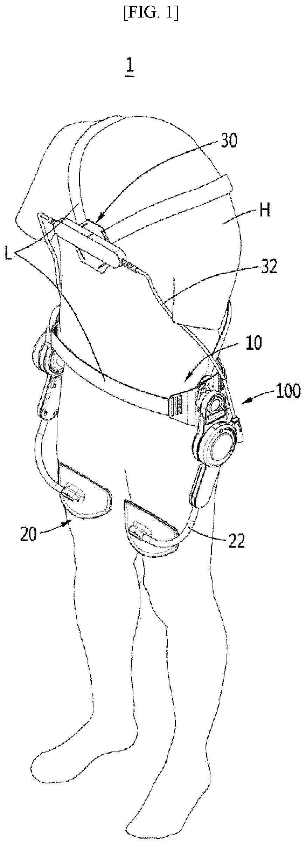

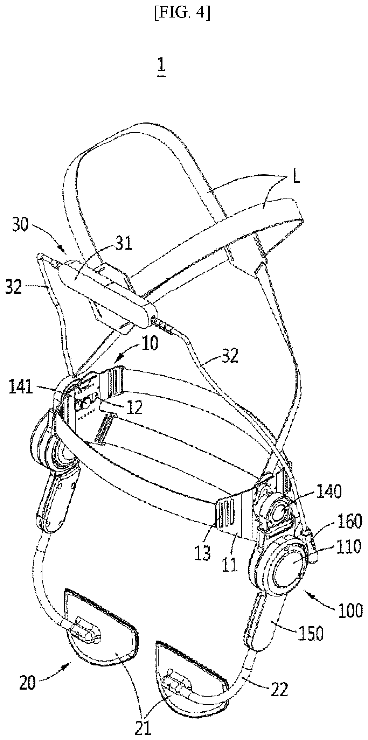

Referring to FIGS. 1 to 3, perspective views schematically showing the front, side, and back of a user wearing an exoskeleton robot 1 according to a preferred embodiment of the present invention are shown. In addition, FIG. 4 is a perspective view schematically showing the exoskeleton robot 1 shown in FIGS. 1 to 3.

For reference, as shown in FIGS. 1 to 3, the exoskeleton robot 1 described in the present invention is designed to be worn by a user (H) to support muscular strength, and may support muscular strength by pushing the chest area or pulling the waist from the back area during the operation of lifting a predetermined load. Hereinafter, the main components of a passive muscular strength support apparatus 100 applied to the exoskeleton robot 1, which is the gist of the present invention, will be described in detail.

As shown in FIGS. 1 to 4, the exoskeleton robot 1 according to one embodiment of the present invention includes first holders 10, a second holder 20, a third holder 30, and the passive muscular strength support apparatus 100, and is designed to be worn by the user (H).

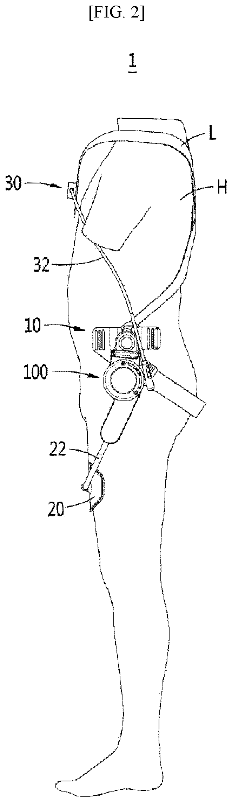

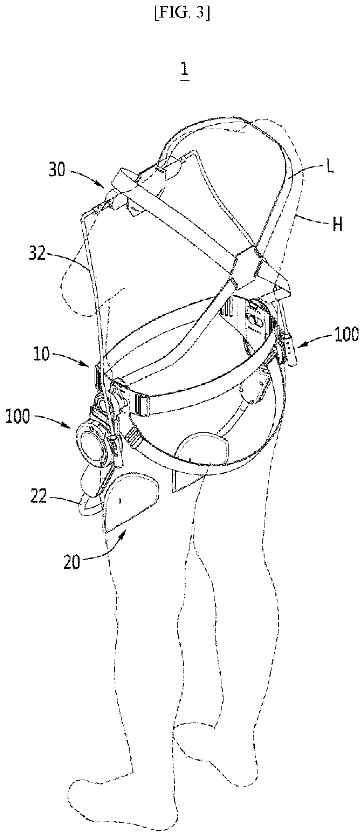

The first holders 10 are placed on the hip joint of the user (H). Here, as shown in FIGS. 2 and 3, the first holders 10 are provided as a pair to be mounted on both sides of the hip joint area of the user (H). As shown in FIG. 4, the first holders 10 are connected to the second and third holders 20 and 30, and the passive muscular strength support apparatus 100 to be described later is installed on the first holders 10. That is, the first holders 10 are connected to a plurality of linkers (L) connecting each part of the exoskeleton robot 1, and are required for the user (H) to wear the passive muscular strength support apparatus 100 to support muscular strength and walking smoothly.

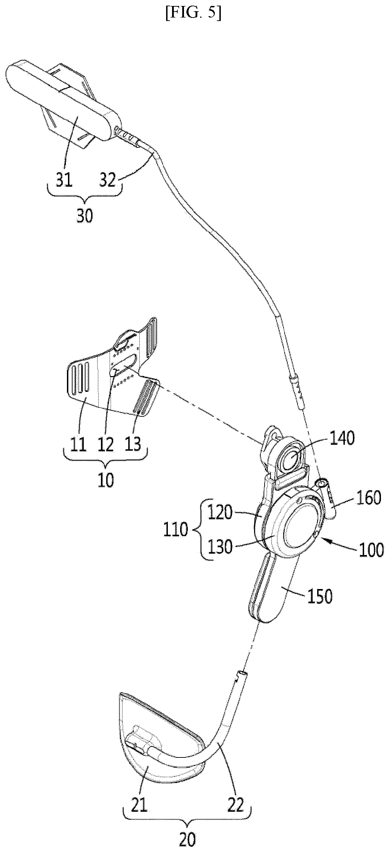

As shown in FIG. 5, the first holders 10 include a first holding body 11 in the shape of a plate with a predetermined area so as to be in close contact with the hip joint. A mounting hole 12 through which the passive muscular strength support apparatus 100 is mounted is formed through the first holding body 11. A plurality of linker holes 13 connected to the linkers (L) connecting each part of the exoskeleton robot 1 is formed through the first holding body 11.

Here, the first holding body 11 has a shape in which the mounting hole 12 is provided by penetrating the center portion thereof. More specifically, the first holding body 11 may have an approximately 'A' shape inclined to the side. In addition, the linker holes 13 are formed through each end of the first holding body 11, which has an 'A' shape tilted to the side. The above shape of the first holding body 11 is an example, and the shape of the first holding body 11 is not limited thereto.

For reference, the linker holes 13 are connected to the linkers (L), which connect the upper limb that supports the shoulder and elbows and the lower limb that supports the hip, knees, and ankles, respectively. The shape of the first holding body 11 and the formation position, number, and size of the mounting hole 12 and the linker holes 13 are not limited to the example shown, and the shapes thereof may be changed in various ways.

As described above, the first holders 10 include the mounting hole 12 and the linker holes 13, so that the first holders 10 guide the user (H) to wear the passive muscular strength support apparatus 100 and the linkers (L) for supporting muscular strength and walking.

The second holder 20 is placed on the thigh area of the user (H). As shown in FIG. 4, the second holder 20 includes a pair of second holding bodies 21 having a curved surface shape corresponding to the curved thigh shape of the user (H), and may be in close contact with the thigh of the user (H). The second holder 20 includes the second holding bodies 21 corresponding to a pair of legs of the user, and the second holding bodies 21 are provided in close contact with a pair of thighs of the user (H).

In addition, the second holder 20 includes first connection members 22 linked to the passive muscular strength support apparatus 100 and the linkers. The first connection members 22 may have a wire shape with one end fixed to the second holding body 21 and the other end connected to the passive muscular strength support apparatus 100. The first connection members 22 are provided as a pair corresponding to a pair of second holding bodies 21.

Here, the first connection members 22, which are connected to the second holder 20, use relative movements with the linkers (L) and the third holder 30, which are connected to the user's hip joint when supporting muscular strength, and are connected to the linkers (L) connected to the passive muscular strength support apparatus 100. The first connection members 22 are interference links for the storage conversion of elastic energy for the passive muscular strength support apparatus 100.

The third holder 30 is mounted on the chest or back of the user (H). In this embodiment, as shown in FIGS. 1 to 3, the third holder 30 is illustrated as being mounted on the chest of the user (H), but the present invention is not limited thereto. As shown in FIGS. 4 and 5, the third holder 30 includes a third holding body 31 having a predetermined area that is in close contact with the chest of the user (H). Here, the third holding body 31 is illustrated as a single body, but a variant example in which the third holding body 31 is provided in plural pieces and is closely mounted on the chest or back of the user (H) is also possible.

In addition, as shown in FIG. 4, the third holder 30 includes second connection members 32 that interconnect the third holding body 31 and the passive muscular strength support apparatus 100. The second connection members 32 have a wire shape with one end fixed to the third holding body 31 and the other end connected to the passive muscular strength support apparatus 100. At this time, the second connection members 32 are preferably provided in a pair so as to be connected to both sides of the third holding body 31, respectively. Like the first connection members 22, the second connection members 32 are interference links for the storage conversion of elastic energy for the passive muscular strength support apparatus 100.

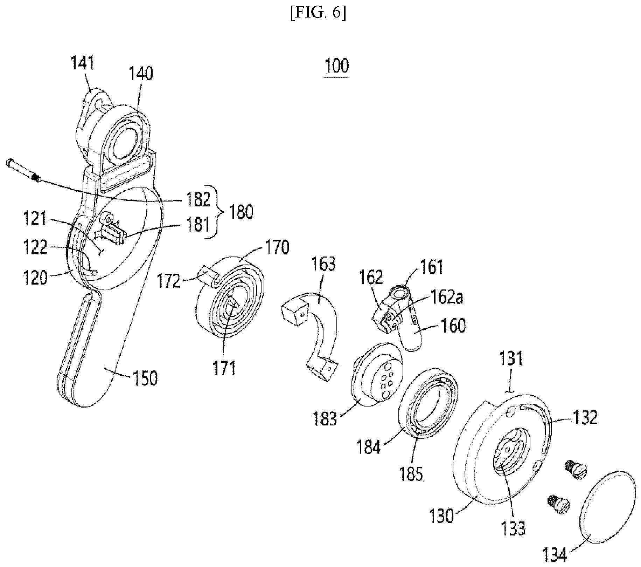

The passive muscular strength support apparatus 100 is configured to be interlinked with the first to third holders 10, 20, and 30, and stores elastic energy for supporting muscular strength and provides driving force. Here, the passive muscular strength support apparatus 100 is mounted on the first holders 10, and elastic energy is stored according to the connection angle with the second and third holders 20 and 30. As shown in FIG. 6, the passive muscular strength support apparatus 100 includes a body 110, a first connection 140, a second connection 150, a third connection 160, an elastic portion 170, and an inducer 180.

The body 110 includes first and second driving bodies 120 and 130 coupled to each other to have a driving space 121 therein. The first and second driving bodies 120 and 130 are coupled to each other to enable coaxial rotation. More specifically, the first driving body 120 has the driving space 121, and the second driving body 130 is configured to cover the driving space 121 provided in the first driving body 120 like a kind of cover. Here, for convenience of assembly, an exposure hole 133 is formed through the second driving body 130 to expose the driving space 121, and the exposure hole 133 may be covered with a cover 134.

The first connection 140 connects the first driving body 120 to the first holders 10. The first connection 140 is provided to protrude toward the first holders 10 on one side of the first driving body 120 and is mounted on the mounting hole 12 of the first holding body 11. More specifically, at the first connection 140, a mounting protrusion 141 coupled to the mounting hole 12 is provided to protrude. Here, the first driving body 120 may rotate around the mounting protrusion 141 of the first connection 140 connected to the first holding body 11.

The second connection 150 interconnects the second holder 20 and the first driving body 120. For this configuration, the second connection 150 is configured to protrude from the other side of the first driving body 120 toward the second holder 20. The second connection 150 is connected to the second holder 20 by fixing the other end of the second connection member 32, one end of which is connected to the second holder 20.

The third connection 160 interconnects the third holder 30 and the second driving body 130. An insertion hole 161 into which the other end of the second connection member 32 connected to the third holder 30 is inserted is formed on one side of the third connection 160, so that the third connection 160 is connected to the second connection member 32 of the third holder 30. As shown in FIGS. 5 and 6, the third connection 160 is provided with a guide projection 162 that is inserted into first and second guide holes 131 and 132 formed through the second driving body 130. The movement of the guide projection 162 is guided by the first and second guide holes 131 and 132.

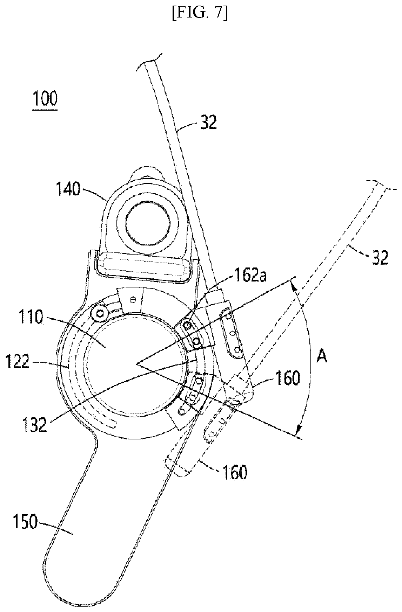

The first guide hole 131 is formed through the side of the second driving body 130, and the second guide hole 132 is formed through the front of the second driving body 130. Inside the first guide hole 131, a stepped guide rail 163 is provided to guide the rotation radius of the guide projection 162 of the third connection 160. As shown in FIG. 7, the rotation radius of the third connection 160 guided along the guide rail 163 may be adjusted within a predetermined adjustment angle range (A). Here, the adjustment angle range (A) may be adjusted according to the height or upper body size of the user (H).

In this embodiment, in response to standard body conditions, the position of the third connection 160 may be adjusted along the guide rail 163 within the adjustment angle range (A) of approximately 0 to 100°, but the present invention is not limited thereto. Here, the third connection 160, whose position is adjusted with respect to the guide rail 163, may be fixed by a fixing means such as a bolt (not shown).

The elastic portion 170 is provided in the driving space 121 between the first and second driving bodies 120 and 130, and the elasticity of the elastic portion 170 varies depending on the movement of at least one of the second and third connections 150 and 160. The elastic portion 170 may include a torsion spring, but the present invention is not limited thereto.

In addition, an inner end 171 provided on the inside of the elastic portion 170 is linked to the movement of the second connection 150, and an outer end 172 provided on the outside of the elastic portion 170 is linked to the movement of the third connection 160. The elastic deformation of the elastic portion 170 will be described in more detail along with the configuration of the inducer 180 to be described later.

The inducer 180 induces deformation of the elastic portion 170 in conjunction with the movement of at least one of the first to third connections 140, 150, and 160. The inducer 180 includes a first guiding member 181 and a second guiding member 182, and at least one of the first and second guiding members 181 and 182 is linked to the movement of at least one of the second and third connections 150 and 160.

The first guiding member 181 is rotatable by being axially coupled to the first driving body 120 so as to be connected to the inner end 171, which is one end of the elastic portion 170. According to one embodiment, the first guiding member 181 includes an adjustment hinge that rotates in the axial direction by axially coupling the inner end 171 of the elastic portion 170 to the first driving body 120. Here, the first guiding member 181 may be linked to the movement of the second connection 150.

More specifically, when the second connection 150 connected to the second holder 20 rotates, the body 110 mounted on the first holders 10 also rotates. As a result, the first guiding member 181, which includes the adjustment hinge axially connected to the first driving body 120, rotates in the axial direction in conjunction with the rotational movement of the body 110. As a result, the inner end 171 of the elastic portion 170 connected to the first guiding member 181 is deformed in a winding or unwinding direction, so that elasticity may be compressed and stored or elasticity may be output by elastic restoring force.

In addition, the inducer 180 may include one or more guiders 183 and 184 coaxially connected to the first guiding member 181 to transmit the movement of the second connection 150 to the first guiding member 181. In this embodiment, the guiders 183 and 184 may include the first guider 183 coaxially connected to the first guiding member 181 connected to the inner end 171 of the elastic portion 170 while pushing the elastic portion 170 toward the first driving body 120 in the surface direction from inside the driving space 121 and the second guider 184 configured to surround the outer diameter of the first guider 183. Here, in the second guider 184, an insertion protrusion 162a protruding from the guide projection 162 protruding from the third connection 160 and inserted into the first guide hole 131 is inserted to provide an insertion line 185 in the circumferential direction.

Here, the shape and number of the first and second guiders 183 and 184 are examples and are not limited to the drawings.

According to the configuration, the rotational force of the body 110 associated with the rotation of the second connection 150 connected to the second holder 20 is transmitted to the first guiding member 181 coaxially connected through the first and second guiders 183 and 184. As a result, the first guiding member 181 rotates the inner end 171 of the elastic portion 170 to deform the elasticity. At this time, contrary to the rotating inner end 171 of the elastic portion 170, the outer end 172 may be fixed to the body 110.

The second guiding member 182 is provided in the first driving body 120 to be connected to the outer end 172, which is the other end of the elastic portion 170, and is capable of moving along a lead line 122 formed in the first driving body 120. In this embodiment, the second guiding member 182 includes a guiding pin that connects the outer end 172 of the elastic portion 170 to the lead line 122 of the first driving body 120, but the present invention is not limited thereto.

Here, when any one of the first and second guiding members 181 and 182, which are respectively connected to the inner end 171 and the outer end 172 of the elastic portion 170, is fixed to the body 110, among the first and second guiding members 181 and 182, the remaining one may move relative to the body 110. At this time, the fixation and movement of the first and second guiding members 181 and 182 may be changed by a user.

The passive muscular strength support operation of the passive muscular strength support apparatus 100 of the exoskeleton robot 1 according to the present invention having the above configuration is explained with reference to FIGS. 4 to 7.

As shown in FIGS. 4 and 5, the body 110 of the passive muscular strength support apparatus 100 is mounted in the mounting hole 12 formed through the first holding body 11 of the first holders 10. At this time, the linkers (L) are connected to the linker holes 13 provided in the first holding body 11, and the mounting protrusion 141 provided in the first connection 140 of the body 110 is inserted into the mounting hole 12. In addition, the body 110 is connected to the first holders 10, the second connection 150 protruding from the body 110 is interconnected with the second holder 20 and the first connection members 22, and the third connection 160 is connected to the third holder 30 with the second connection members 32 interposed therebetween.

When the user (H) wearing the exoskeleton robot 1 equipped with the passive muscular strength support apparatus 100 walks or lifts a load, the exoskeleton robot 1 performs walking or muscular strength support movements. For example, when the user (H) wearing the exoskeleton robot 1 lifts luggage, the second holder 20 mounted on the thigh of the user (H) rotates, and the rotational movement of the second holder 20 links the second connection 150 through the first connection members 22. In conjunction with the rotational motion of the second holder 20 and the second connection 150, the elastic portion 170 is compressed and the elasticity is stored.

At this time, elastic deformation force is induced by the first guiding member 181, which is axially connected to the inner end 171, so that the elastic portion 170 receives the rotational force of the body 110 through the first and second guiders 183 and 184. The elasticity stored as the elastic deformation force of the elastic portion 170 is applied to support muscular strength, thereby supporting the muscular strength of the user (H). Conversely, even when the inner end 171 of the elastic portion 170 is fixed and the outer end 172 is rotated with the second guiding member 182 along the lead line 122, the elasticity of the elastic portion 170 is varied to manually support muscular strength.

As described above, when supporting muscular strength by the exoskeleton robot 1, the passive muscular strength support apparatus 100 stores elasticity using the relative movement of the first to third holders 10, 20, and 30 to support muscular strength. Therefore, unlike the existing method in which the user (H) deforms the elastic portion 170 by directly applying a load through the movement of the joint, elastic energy is stored in conjunction with the user's (H) movement to apply muscular strength. That is, the passive muscular strength support apparatus 100 according to the present invention may reduce unnecessary movement of the user (H), and sufficient muscular strength support is possible with a small amount of muscular strength consumption.

In addition, in this embodiment, the passive muscular strength support apparatus 100 is exemplified by manually deforming the elasticity for supporting muscular strength by the user's operation. A modified embodiment in which the passive muscular strength support apparatus 100 includes a motor to control elastic deformation of the elastic portion 170 is also possible.

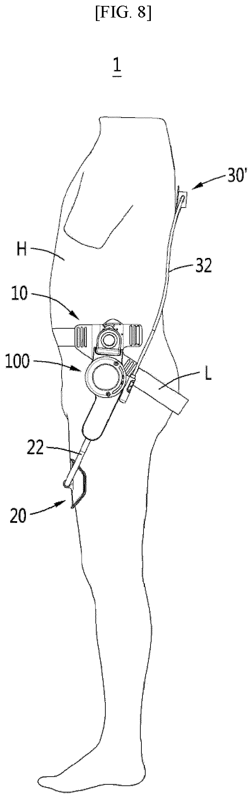

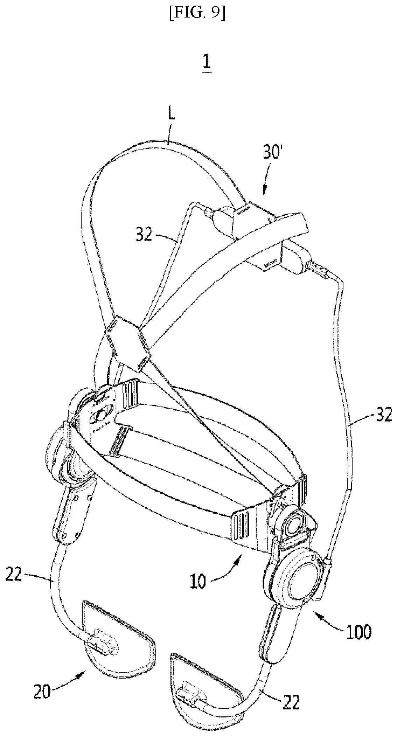

In addition, as shown in FIGS. 8 and 9, a modified example in which a third holder 30' is mounted on the back of the user (H) rather than the chest is also possible. As shown in FIGS. 8 and 9, even when the third holder 30' is mounted on the back of the user (H), the configuration of the first holders 10, the second holder 20, and the passive strength support apparatus 100, except for the third holder 30', is the same as FIGS. 1 to 7. That is, the positions of the third holders 30 and 30' may vary depending on the gender, physical condition, purpose of use, and convenience of the user (H).

Although the present invention has been described above with reference to the embodiments of the present invention, those skilled in the art may variously modify and change the present invention without departing from the spirit and scope of the present invention as set forth in the claims below.

## Claims

1. A passive muscular strength support apparatus for an exoskeleton robot, comprising:
a body comprising first and second driving bodies coupled to each other to have a driving space therein;
a first connection configured to connect a hip joint area of a user and the first driving body;
a second connection configured to connect a thigh area of the user and the first driving body;
a third connection configured to connect a chest or back area of the user and the second driving body;
an elastic portion provided in the driving space between the first and second driving bodies, wherein elasticity of the elastic portion is deformed; and
an inducer for inducing deformation of the elastic portion in conjunction with movement of at least one of the first to third connections with respect to the body.

2. The passive muscular strength support apparatus according to claim 1, wherein the third connection is inserted into a guide hole provided in the second driving body, and a position thereof is adjusted along a guide rail provided in the guide hole.

3. The passive muscular strength support apparatus according to claim 2, wherein the guide rail has a stepped rail shape to adjust a position of the third connection in an adjustment angle range according to physical conditions of the user.

4. The passive muscular strength support apparatus according to claim 3, wherein the adjustment angle range comprises a range of 0 to 100°.

5. The passive muscular strength support apparatus according to claim 1, wherein the inducer comprises a first guiding member that is axially coupled to the first driving body so as to be connected to one end of the elastic portion and is capable of axial rotation in a direction in which the elastic portion is wound or unwound; and
a second guiding member configured to move along a lead line formed in the first driving body so as to be connected to the other end of the elastic portion,
wherein the first and second guiding members are linked to movement of at least one of the second or third connection.

6. The passive muscular strength support apparatus according to claim 5, wherein the elastic portion comprises a torsion spring,
the first guiding member comprises an adjustment hinge that rotates in conjunction with an inner end provided inside the elastic portion, and
the second guiding member comprises a guiding pin that is coupled to an outer end provided outside the elastic portion and is guided along the lead line.

7. The passive muscular strength support apparatus according to claim 5, wherein the inducer comprises one or more guiders coaxially connected to the first guiding member to transmit movement of the second or third connection to the first guiding member.

8. An exoskeleton robot, comprising:
first holders mounted on a hip joint area of a user;
a second holder mounted on a thigh area of the user;
a third holder mounted on a chest or back area of the user; and
the passive muscular strength support apparatus according to any one of claims 1 to 7 that provides driving force by storing elastic energy to support muscular strength,
wherein the first to third connections are connected to the first to third holders, respectively.

9. The exoskeleton robot according to claim 8, wherein the first holders are connected to a plurality of linkers connecting an upper limb for supporting shoulders and elbows and a lower limb for supporting hips, knees, and ankles.

10. The exoskeleton robot according to claim 8, wherein the first holders comprise at least one pair of first holding bodies with a predetermined area to be in close contact with a hip joint area of the user,
a mounting hole through which the first connection is connected is formed through the first holding bodies, and
a plurality of linker holes through which a plurality of linkers are respectively connected are formed through the first holding bodies.

11. The exoskeleton robot according to claim 8, wherein the second holder comprises at least one pair of second holding bodies curved to fit tightly against a thigh area of the user, and
the second holding bodies and the second connection are linked by the first connection members.

12. The exoskeleton robot according to claim 8, wherein the third holder comprises a third holding body that is attached or detached to a chest or back area of the user, and
the third holding body and the third connection are linked by the second connection members.
